# EUROPEAN PATENT SPECIFICATION

(11) **EP 3 261 575 B1**
(45) Date of publication and mention of the grant of the patent: **30.12.2020**
(21) Application number: 16718498.5
(22) Date of filing: 26.02.2016
(51) Int. Cl.: A61C 1/00

(54) **DENTAL UNIT**
ZAHNEINHEIT
UNITÉ DENTAIRE

(30) Priority: 27.02.2015 NL 2014367
(43) Date of publication of application: 03.01.2018
(73) Proprietor: P.B. International B.V., 7021 BN Zelhem (NL)
(72) Inventor: Van Hecke, Antoniuis Ludovicus, 7025 AB Halle (NL)
(74) Representative: V.O.
(86) International application number: PCT/NL2016/050138
(87) International publication number: WO 2016/137325

(56) References cited:
- WO-A1-02/38069
- WO-A1-2005/026456
- WO-A2-03/005925
- US-A- 5 526 841

## Description

The invention relates to a dental unit, particularly a dental chair,having a water supply means for supplying water to a tapping point and/or a dental tool, as defined in the claims.

Such systems are generally known. The known system includes a dental unit with (optionally) integrated dental engine, comprising for example a spittoon or bowl, one or more suction hoses, water nozzles, dental drills, dental multifunction syringes, or other dental tools. Many of these modern dental tools use water and must therefore be connected to a water supply means.

A tricky problem with these conventional dental units is hygienic safety and the prevention of contamination of the patient, the dentist, or any other health care worker in the dental practice team. Dental unit waterlines are prone to microbial biofilm contamination resulting in heavily contaminated output water. The patient, dentist, and other health care workers therefore risk to be contaminated by these bacteria, especially by the legionella bacteria, for example by inhaling atomized water which is liberated by the use of certain dental tools. The legionella bacteria can cause severe suffering, and may in some cases even be fatal.

Many solutions have already been put forward, for example regular flushing of dental waterlines, the use of sterile, deionized or distilled water, and/or chemical disinfection of dental waterlines. These methods either prove to be not enough effective, as turns out from the reporting of several legionella contaminations in dental practices in Europe in recent years, or they entail new safety issues for the patient, the dentist and other health care workers involved, for example when using chemical products. Moreover, the regular maintenance of a dental unit can be labour intensive, and rise costs, for example through the purchase of chemical disinfection products. The use of chemical disinfection products also possibly involves an environmental risk.

For example, US5526841 discloses a water line decontamination unit having inlets for connection to a supply of irrigant liquid, a supply of disinfectant, and a pressurized gas supply, and an outlet for connection to a water line inlet.

WO2014/082855 discloses water systems, medical equipment, and apparatus for thermal disinfection, comprising a control unit which starts the disinfection of a fluid path by controlling a heating unit to heat water and controlling an actuator to enable heated water to flow into the fluid path.The present invention aims at overcoming the drawbacks of prior art systems, while providing a dental unit which is safe for the patient, the dentist and other health care workers involved, as well as for the environment.,

According to the invention, the dental unit is characterized to this end by the features of claim 1.

The dental unit provided by the invention has a water supply means for supplying water to a tapping point and/or a dental tool. This water supply means comprises a water filtering unit and a water disinfection unit.

It has been found the dental unit according to the invention, if used properly, does not suffer from bacterial contamination, thereby minimizing chances of spreading e.g. legionella bacteria to patients and dental health care workers operating the unit. The water filtering unit can be configured to suppress water contaminants (e.g. bacteria) reaching downstream water outlet(s) of the unit. The water filtering unit can be configured to operate full time, that is, at least during patient treatment. In addition, the water disinfection unit can disinfect the water, particularly such that the disinfected water can disinfect interior water conducting surfaces of water conducts of the water supply means. The water disinfection unit does not have to be operated full time, e.g. only during certain disinfection periods between patient treatment periods.

The water filtering unit is preferably arranged downstream with respect of the water disinfection unit. The water filtering unit supplies filtered water to a tapping point and/or dental tool of the dental unit, while the water disinfection unit allows supplementary disinfecting rinsing of downstream dental unit waterlines and the downstream water filtering unit, providing enhanced bacteria suppression..

Preferably the water supply means can supply water of at least drinking water quality, irrespective of the initial water supply quality (i.e. of water provided by an upstream water source). The water supply means does not make use of any chemical disinfection product (e.g. in case the disinfection unit is a thermal disinfection unit) . The dental unit according to the invention is easy to clean, and drastically reduces maintenance costs, saving up on chemicals and man-hour, and expenses.

In one embodiment, the water supply means are connectable to an upstream water source for receiving the water, the source for example being a water outlet of a water utility, or alternatively a local water container. The source can provide water at a certain operational pressure, for example a pressure in the range of 1-10 bar or a different pressure (a pressure particularly higher than atmospheric pressure), as will be appreciated by the skilled person).

Preferably, the water filtering unit comprises at least one filter tube, for example a filter tube having a plurality of filter channels. These filter tubes have a porous tube wall for separating at least one filtering space from a collecting space, in particular such that water, supplied to said filtering space, is passed substantially bacteria free, in particular Legionella free, via said porous tube wall to said collecting space.

In a preferred embodiment, the water filtering unit is provided with means for connection with a flushing system, in particular for the purpose of removing bacteria that may have accumulated in said filtering space. This prevents clogging of the filtering space.

In order to flush the substantially entire filtering space of the water filtering unit well and effectively, it is preferred to provide the upstream end of the filtering space with a liquid supply, and the downstream end of the filtering space with a liquid discharge with the purpose of removing bacteria.

Preferably, the flushing means are designed for flushing the filtering space automatically, preferably regularly, in particular during a particular period of flushing before and/or after use (i.e. dental treatment of a patient) of the dental unit. For this purpose, the flushing means can be provided with, for instance, regulating means and/or a control, e.g. an electronic controller, a manually operable control means or a combination thereof. Further, for instance, a timer can be provided for activating and deactivating the flushing means at desired moments. It is preferred that flushing the filtering space is carried out simply with water, which is relatively safe and inexpensive compared to the use of chemical cleaners.

Preferably, the configuration is such that flushing liquid, which may be contaminated by bacteria, does not contaminate any downstream waterlines coupled to and/or of (i.e. associated with) the dental unit. To that end, the water filtering unit can be provided with a filtered water outlet, which connects the collecting space to a dental unit water outlet, while said liquid discharge is separated from said filtered water outlet.

In order to filter bacteria effectively, the at least one filter tube preferably includes at least one liquid channel extending in a longitudinal direction of the tube and is surrounded by said porous tube wall. This porous tube wall is for instance provided with pores having a pore diameter size < 1 µm, for example in the range of approximately 0.005 - 0.04 µm, more in particular in the range of approximately 0.01 - 0.03 µm.

In another preferred embodiment the water supply means include an operable bypass, arranged for bypassing the water disinfection unit, for example to bypass the water disinfection unit during dental care taking of a patient. This bypass can be manually operable, or automatically operable, for example at given time intervals, for instance monthly or weekly or daily or otherwise. Bypassing the water disinfection unit can reduce or avoid any water pressure drop during patient treatment, which pressure drop might occur in case the water is fed through the disinfection unit depending on its design.

In a preferred embodiment, the water supply means is configured such that build up of microbial contamination (e.g. contaminated biofilm on an inner wall of a water duct) downstream of the water filtering unit is avoided or suppressed. Such contamination might enter a downstream section of the water supply means via a said (most downstream) tapping point and/or a dental tool, for example because of direct contact with the patient, or because of retraction of oral fluids into dental unit waterlines due to failing anti-retraction valves.

According to an aspect of the invention, for a regular internal disinfection of dental unit waterlines/ducts, also downstream of the filtering unit, the water filtering unit of the dental unit is combined with a water disinfection unit, so that regular disinfection rinsing of the substantially entire dental unit waterlines from that disinfection unit until the tapping points and/or dental tools of the dental unit can be achieved. This further prevents the proliferation of the contaminated biofilm within the dental unit waterlines, and preferably leads to substantial removal of such a biofilm (if present).

According to the invention, the water disinfection unit is a thermal disinfection unit. Preferably at least a part of the water supply means downstream of the water disinfection unit includes thermally insulating ducts and/or thermal proof ducts, for example made of plastic.

Water heated up to relatively high temperatures is very efficient in killing bacteria, for example legionella bacteria, in water, and thus to disinfect the interior of dental unit water ducts carrying such hot water.

The thermal water disinfection unit preferably comprises at least one heating element to heat supplied water, in particular to a water disinfection temperature higher than 50 °C (and e.g. lower than 100 °C), for example in the range of 60-80 °C. This disinfection temperature is preferably adaptable to the total length of the dental unit waterlines to be cleaned, as there is can be certain loss of temperature per meter waterline. On top of that, the disinfection temperature also determines the time needed for effective internal thermal disinfection of dental unit waterlines: the higher the water disinfection temperature, the shorter disinfection of waterlines will take. Therefore, preferably, the thermal water disinfection unit is configured to generate hot water at a temperature such that the water temperature at the tapping point and/or the dental tool is sufficiently high to kill bacteria, during a disinfection rinsing period.

Thus, regular, for example daily or weekly, rinsing of the dental unit waterlines with heated water, in combination with the water filtering system, makes safe, for instance bacteria free, water supply possible in the dental unit. For obvious safety reasons, an environment of the thermal water disinfection unit is preferably thermally insulated from the at least one heating element.

Preferably, the water supply means includes a control system or control unit, for example a microcontroller, computer or the like, for controlling various functions of water supply means (and optionally of other parts of the dental unit). The control unit is preferably configured to control any upstream water inlet valve of the water supply system, if available. Also the control unit is preferably configured to control activation and deactivation of the disinfecting unit, and also any disinfection unit bypass if present. For example, the control unit can be configured to activate and deactivate a rinsing step for rinsing water ducts of the water supply means, the rinsing involving e.g. one rinsing step using water that is disinfected by the water disinfection unit, and another rinsing step using untreated water (during a deactivation of the water disinfection unit). For example, said untreated water may be cold water (providing by an upstream water source), for swiftly cooling down water ducts of the water supply means after a previous step of thermal treatment by rinsing with hot water. In an embodiment the control unit can also be configured for controlling flushing of a said filter unit.

The invention further provides a system including a water filtering unit and a thermal water disinfection unit, adapted to be installed in/on a dental unit for providing a dental unit according to the invention. It is preferred to mount the system as close as possible to the one or more water outlet points (i.e. said tapping point and/or a dental tool) of the dental unit, for example under a spittoon, or in a unit base.

Also a method for cleaning a dental care system (particularly water lines of such a system), which comprises at least one dental unit, for example a dental unit according to the invention is described. The method includes feeding water to the dental unit, filtering the water by a water filtering unit and disinfecting the water by a water disinfection unit, in particular before the water reaches for example a tapping point and/or a dental tool associated with the dental unit.

Preferably, the method includes passing water through at least one filter tube with a porous tube wall. This porous tube wall separates at least one filtering space from a collecting space, in particular such that water, supplied to said filtering space, is passed substantially bacteria free, in particular Legionella free, via said porous tube wall to said collecting space.

To prevent clogging of the filtering space, this at least one filtering space can be flushed at least once, for example regularly, in particular with the purpose of removing bacteria that may have accumulated in said filtering space. The flushing liquid, contaminated with the in the filtering space accumulated bacteria, leaves the filtering space via a drainage sluice to an open liquid discharge, so that it does not contaminate the dental unit waterlines which lead to the tapping points and/or dental tools of the dental unit. Preferably, an operable valve regulates the flushing of said at least one filtering space, manually or automatically, for instance at given time intervals.

In a preferred method, an operable bypass regulates feeding water to a water inlet of said water disinfection unit. Preferably, the disinfection unit is not in use during dental care of a patient.

To prevent proliferation of a biofilm on the inside of dental unit waterlines, they are, for example regularly, rinsed with water, which is thermally disinfected by heating to a temperature in the range of 60°-80° C, which is high enough to kill bacteria that might be present in the water and/or dental unit waterlines. The disinfection temperature (i.e. the temperature of the hot water that is delivered by a heating element) can be chosen in function of the length of the total waterlines to be rinsed to compensate for any temperature loss per meter in the waterlines (of for example 1.5 °C per meter), and e.g. in function of the time of rinsing: higher disinfection temperatures allow shorter rinsing time for similar disinfection results, for example an disinfection temperature of 80 °C for a minimum of 10 minutes rinsing, or 70 °C for a minimum of 20 minutes rinsing, or an disinfection temperature of 80 °C, an output water temperature of 65 °C at a said tapping point and/or a dental tool and a thermal disinfection of 25 minutes.

For the actual disinfecting rinsing, water is preferably treated by the water disinfection unit first. It is treated thermally. Then the treated (i.e. disinfected) water is preferably fed via the water filtering unit to a tapping point and/or a dental tool associated with the dental unit. In this way, also waterlines downstream from the filtering unit, which might have been contaminated by a patient's bacteria, are disinfected effectively.

Directly after an internal thermal disinfection of the dental unit waterlines through rinsing with hot water, the waterlines are preferably flushed with cold water (e.g. water at room temperature of water having a temperature lower than 20 °C) for at least some minutes, to cool down the disinfected dental unit waterlines to a temperature below 25 °C to further prevent immediate proliferation of any biofilm. For example, the waterlines can be rinsed during a first period during activation of the thermal water disinfection unit, and during a subsequent second period immediately following the first period, wherein the thermal water disinfection unit is deactivated at the time point between said first and second period.

In another embodiment, the disinfection unit heats at least part of a duct system of the dental unit for disinfecting inner walls thereof.

In a preferred example, the method includes operating a control member, thereby starting a disinfection step of feeding water through the water disinfection unit and the water filtering unit, and activating the water disinfection unit. Then, preferably, the disinfection is carried out automatically, e.g. timer based, including automatic deactivation of the water disinfection unit after a certain amount of time and automatic turning off duct rinsing after a certain amount of time. As follows from the above, the water disinfection unit may be deactivated before rinsing is halted, e.g. in case duct cooling is to be carried out after a thermal duct disinfection step.

The invention will now be described and clarified with reference to the drawing figures of exemplary embodiments, in which
Figure 1 shows a perspective view of a art dental unit according to an embodiment of the invention;
Figure 2 shows a schematic drawing of an exemplary embodiment of a water supply means of the embodiment shown in Fig. 1;
Figure 3 shows a schematic drawing of a water filtering unit of the water supply means shown in Fig. 2;
Figure 4 shows a schematic drawing of a thermal water disinfection unit of the water supply means shown in Fig. 2; and
Figures 5A, 5B schematically show an opened front view of further embodiments of parts of the water supply system.

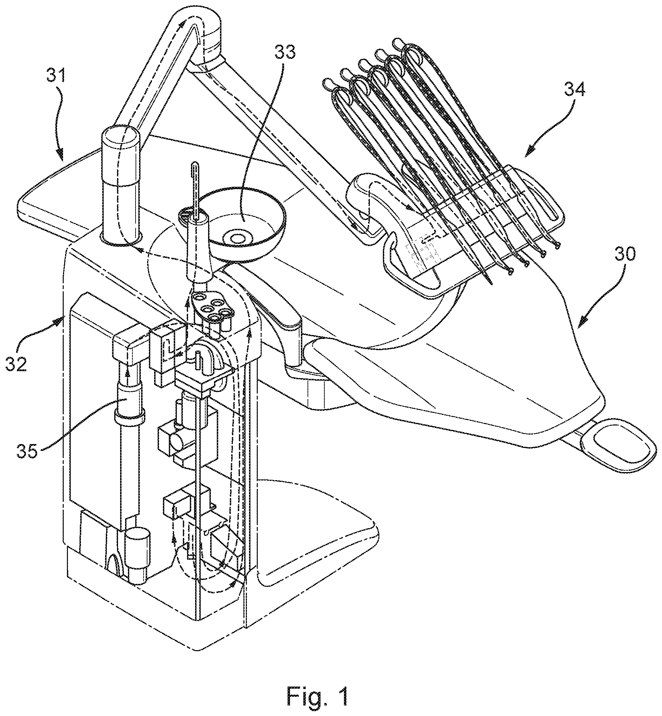

Figure 1 shows a perspective view of a dental unit 30, the unit being a dental chair. As is generally known, such a dental unit 30 can carry a patient during treatment, preferably in a reclining or upright sitting position, optionally with a fixed or foldable leg rest 31. Adjacent to the patient supporting section the dental unit 30 comprises a dental engine 32, preferably comprising a spittoon 33 or a bowl, and dental tools 34, for example suction tubes, water nozzles, dental drilling means, dental multifunction syringes, or other dental tools. The dental engine 32 is preferably coupled to a water supply means 35 for supplying water to a tapping point associated with the spittoon 33, and/or the dental tools 34 via e.g. flexible waterlines.

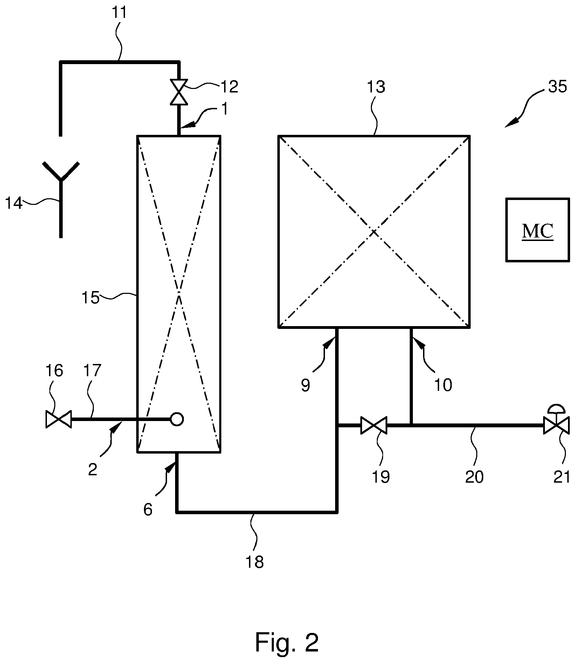

Figure 2 shows a schematic drawing of an exemplary embodiment of the water supply system 35, configured for supplying water (emanating from an upstream source -not shown-) to e.g. a dental tapping point 33 and/or a dental tool 34 (of the dental engine 32) via an exit water line 17 and respective water supply outlet 16. Advantageously it includes a water filtering unit 15 and water disinfection unit 13. As is the case in this embodiment, the water filtering unit 15 is preferably arranged downstream with respect to the water disinfection unit 13.

The water disinfection unit 13 is a thermal water disinfection unit.

The water supply means 35 include an operable water supply valve 21 water (connected to the water source after installation) and incoming waterline 20 for feeding water to the water disinfection unit 13. In this example, the water supply means include an operable bypass valve 19, arranged in a bypass line for bypassing the water disinfection unit 13. The bypass valve 19 can be manually operable, or automatically operable, for example at given time intervals, for example controlled by the control unit MC (e.g. a microcontroller or computer) if available.

As is mentioned before, the water disinfection unit 13 is a thermal water disinfection unit, wherein preferably at least a part of the water supply means 35 downstream of the water disinfection unit 13 includes thermally insulating ducts, for example made of plastic. The bypass valve 19 has an open state so that the water disinfection unit 13 is bypassed, and incoming water is fed directly via supply line 20 and subsequent supply line 18 to the water filtering unit 15. When the bypass valve 19 is closed, incoming water is fed via a first supply line 20 to the water disinfection unit to be treated thereby, and subsequently from the water disinfection unit via a second supply line 18 to the filtering unit 15.

Preferably, the water supply system 35 includes a controller or control unit MC, for example a microcontroller, computer or the-like, configured for controlling for example a said bypass valve 19, controlling any input and output valves 12, 16, 21 of the water supply system, activation and deactivation of disinfection means 13, e.g. heating means, if any. Alternatively or additionally, one or more of said valves 12, 16, 19, 21 may be manually controllable (e.g. a main inlet valve 21 of the system). The controller MC may be configured for carrying out a method according to the invention, for example to activate a disinfection step at one or more predetermined times, periodically, and/or based on a user operating an activation switch, user interface or other suitable user control member if available.

In an advantageous embodiment of the dental unit 30, said control unit MC may be combined with or integrated in a dental unit control for controlling various functions of the dental unit 30 (e.g. for repositioning a patient support section of the unit with respect to a base), and/or the dental tools 34.

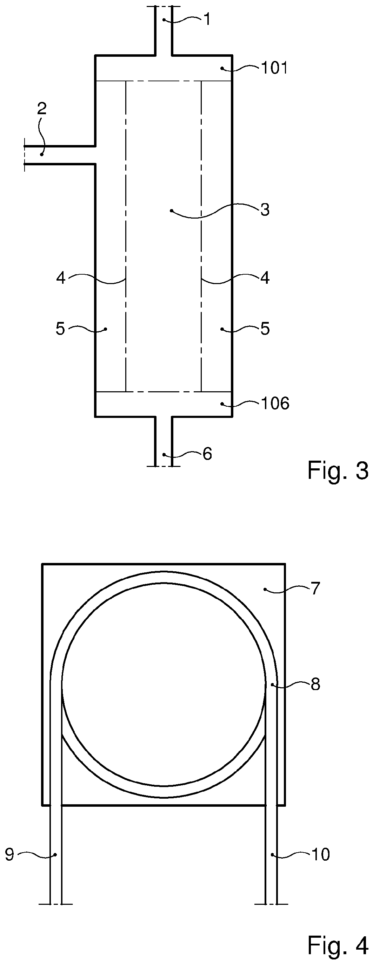

Figure 3 shows a schematic drawing of the water filtering unit 15 in more detail. In this example, it comprises at least one filter tube, preferably more.

Each filter tube may include a number of channels (for example seven channels) extending in longitudinal direction of the tube, the channels together providing a water filtering space 3. Only one such channel 3 is shown in the present drawings. The channels 3 are surrounded by the porous tube wall 4 of the filter tube. An upstream open end of each filter tube, at least of the respective filter channels 3, comprises a water inlet coupled to a common the water supply chamber 106 (at filter inlet 6). A downstream open end of each filter tube, at least of its channels, comprises a water outlet coupled to a common liquid discharge space 101 (at a flushing outlet 1).

The porous tube wall 4 separates the at least one filtering space 3 from a collecting space 5, in particular such that water, supplied via inlet 6 and water supply chamber 106 to said filtering space 3, is passed substantially bacteria free, in particular Legionella free, via said porous tube wall 4 to said collecting space 5.

The porous tube wall 4 of the at least one filter tube is advantageously provided with pores having a pore diameter size < 1 µm, for example in the range of approximately 0.005 - 0.04 µm, more in particular in the range of approximately 0.01 - 0.03 µm. The porous tube wall 4 preferably includes a permeable membrane, for example made of polyethersulfone.

Preferably, an outside of each filter tube has a total surface of at least approximately 0.15 m2, more in particular at least approximately 0.4 m2.

Preferably, each filter tube is designed for filtering approximately at least approximately 0.012 m3 of water per hour, at a water pressure of supplied water of at least approximately 0.1 bar. As a result, good and patient friendly dental treatment can be achieved.

The water filtering unit 15 is provided with means for connection with a flushing system, in particular for the purpose of removing bacteria that may have accumulated in said filtering space 3. Preferably, the flushing, for example with water, is effected at least once, or better, regularly, for example monthly, weekly, or before and/or after every working day or several times a day. For this purpose, the downstream end of the filtering space 3 is provided with a liquid discharge 1 (and drain/ sewer 14) via a drainage sluice 11, which is in the example of Figure 2 equipped with an operable flushing valve 12. The flushing valve 12 can for example be a manually or automatically operable valve (e.g. controllable by the control unit MC), and is arranged for regulating the flushing of said at least one filtering space 3.

In the examples of Figures 2 and 3, said liquid discharge 1, 11, 14 is separated from a filtered water outlet 2, 17, which connects the collecting space 5 to a dental unit water outlet 16. As follows from the above, the water outlet 16 is for example in liquid connection with the dental engine, e.g. a water tapping point, and/or the dental tools that make use of water, such that these elements are all provided with filtered, substantially bacteria free, for instance Legionella free, water.

Figure 4 shows a schematic drawing of a thermal water disinfection unit, which is a preferred embodiment of the water disinfection unit 13. Said thermal water disinfection unit 13 comprises at least one heating element (i.e. heating unit or heater) 8 to heat water supplied via water inlet 10, in particular to a temperature higher than 50 °C, for example in the range of 60-80 °C. By doing so, water is thermally disinfected. Preferably, an environment 7 of the thermal water disinfection unit 13 is thermally insulated from said at least one heating element 8. Also, preferably the water supply means downstream of a water outlet 9 of the water disinfection unit 13 substantially includes thermally insulating ducts, for example made of plastic. In this example, the heating element 8 is arranged in one or more coils or loops, within a housing of the disinfection unit 13.

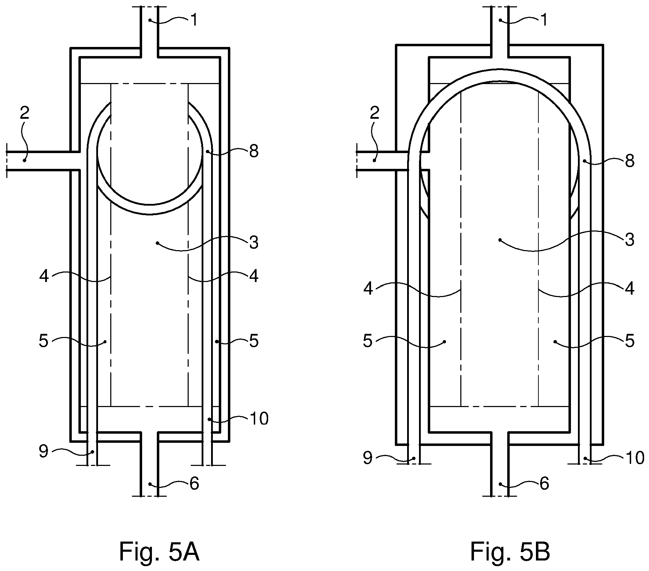

Figures 5A, 5B show further embodiments of part of a dental unit according to the invention. In the embodiment of Fig. 5A, the filter means 15 and disinfection unit 13 are integrated with one another. Particularly, in this more compact, alternative embodiment, the water filtering unit and the thermal water disinfection unit form a compact integrated water treatment unit installed, in the same housing, comprising all the elements from the separate embodiments depicted in Figures 2, 3 and 4, namely: a filter flushing liquid discharge 1, a filtered water outlet 2, a filtering space 3, at least one porous tube wall 4, a collecting space 5, a liquid supply 6, at least one heating element 8, a respective heated water outlet 9 and a water supply 10. The skilled person will appreciate that the outlet 9 of the disinfection unit 13 can be connected to the inlet 6 of the respective filter means, following the diagram shown in Fig. 1. Also, it will be clear that the integrated unit 13, 15 can include or be connected to a said bypass means 19 for bypassing the disinfection unit 13.

In the example of Fig. 5A, one or more heating elements 8 is/are particularly arranged to enclose the tube wall(s) 4 and filtering space 3 (the heating element 8 is looped around that part of the filter means). Integrated water ducts leading to and from the heating element(s) 8 are conveniently located in the filtered water collecting space 5, in this example. In this case, the heating means 8 can be operated to heat water that is present in the filter a collecting space 5.

Figure 5B shows a further alternative, wherein thermal disinfection can be carried out directly in the filter (heating means 8 having been integrated in the filter). In this, case the heating means and filter are located in the same housing, wherein the heating means 8 extend outside water collecting space 5 of the filter.

Use of the dental unit 34 can include a method for cleaning a dental care system, including feeding water to the dental unit via dental unit waterlines 17 and the outlet 16, filtering the water by the water filtering unit 15 and disinfecting the water by the water disinfection unit 13, in particular before the water reaches for example a outlet 16 associated with the dental unit.

Use of the dental unit 34 may include at least two operating modes: the unit can be operated during at least one patient treatment mode during which water (supplied via inlet valve 21) is fed through the water supply means and to the dental engine without activating the water disinfection unit 13. This is preferably done under bypassing the water disinfection unit 13, i.e. by setting bypass valve 19 to its open state.

The unit can also be operated during at least one disinfection mode during which water is fed through the water supply means under activation of the water disinfection unit 13, and via that unit 13 (i.e. bypass valve 19 is closed). During this second operation mode, water is treated by the water disinfection unit 13 first, wherein the treated water is fed via the water filtering unit 15 to the outlet 16 associated with the dental unit. This is preferably carried out in such a way (e.g. using suitably hot disinfecting water) that substantially all dental unit waterlines downstream of the filtering unit 15 are disinfected.

Initiating disinfection can be achieved in various ways, e.g. manually and/or automatically (e.g. by the control unit MC). To start the second operation mode, it is preferred to operate a control member thereby starting a disinfection step of feeding water through the water disinfection unit 13 and the water filtering unit 15, and activating the water disinfection unit 13. Alternatively, this step can be controlled by a control unit MC, configured to carry out a method according to the invention, for example to activate a disinfection step at one or more predetermined times, periodically, and/or based on a user operating an activation switch, user interface or other suitable user control member if available.

As is mentioned before, preferably, directly after an internal thermal disinfection of the dental unit waterlines 2, 9 through rinsing with the hot water, waterlines 9, 6, 2 are preferably flushed with cold water (e.g. water at room temperature of water having a temperature lower than 25 °C) for at least some minutes, to cool down the disinfected dental unit waterlines to a temperature below 25 °C to further prevent immediate proliferation of any biofilm.

The disinfection mode can be combined with or partly overlap with a flushing of the tube(s) of the filtering unit 15. Flushing the filter tube(s) (which can be controlled by controlling a flushing valve 12 in this example) can also be independent of a disinfection step.

The water filtering unit and/or the water disinfection unit can for example have different shapes, as to adapt them to where they should be incorporated on (e.g. inside or outside) the dental unit. Or the flushing means of the water filtering unit might possibly be replaced by disposable filter tubes. Also, in an embodiment, the filter unit 15 as such may be configured to be replaceable (by the same type or another type of filter unit).

Also, preferably, the filtering unit 15 and disinfecting unit 13 are preferably located within a housing of a base or supporting part of the dental unit (as in Figure 1), but that is not required.

Besides, preferably, the filtering unit includes a large number of filter tubes having porous tube walls 4, the tubes e.g. being arranged in parallel with one another, and e.g. extending from a common water inlet space 106 (at inlet 6) to a common water discharge space 101 (at outlet 1), and e.g. being surrounded by a common filtered water collecting space 5.

## Claims

1. Dental unit, for example a dental chair, having a water supply means for supplying water to a tapping point and/or a dental tool, wherein the water supply means comprises a water filtering unit (15) and a water disinfection unit (13), wherein the water filtering unit (15) is arranged downstream with respect to the water disinfection unit (13),
**characterized in that** the water disinfection unit (13) is a thermal water disinfection unit that is configured to generate hot water at a temperature such that the water temperature at the tapping point and/or the dental tool is sufficiently high to kill bacteria, wherein the hot water has a temperature higher than 50°C, wherein the water supply means does not make use of any chemical disinfection product.

2. Dental unit according to claim 1, wherein said water filtering unit (15) comprises at least one filter tube with a porous tube wall (4) for separating at least one filtering space (3) from a collecting space (5), in particular such that water (6), supplied to said filtering space (3), is passed substantially bacteria free, in particular Legionella free, via said porous tube wall (4) to said collecting space (5).

3. Dental unit according to claim 2, wherein said water filtering unit (15) is provided with means for connection with a flushing system, in particular for the purpose of removing bacteria that may have accumulated in said filtering space (3).

4. Dental unit according to any preceding claims 2-3, wherein said at least one filter tube is provided with at least one liquid channel (3) which extends in a longitudinal direction of the tube and is surrounded by said porous tube wall (4).

5. Dental unit according to any preceding claims 2-4, wherein said porous tube wall (4) of the at least one filter tube is provided with pores having a pore diameter size < 1 µm.

6. Dental unit according to any preceding claims 2-5, wherein said porous tube wall (4) of the at least one filter tube is provided with pores having a pore diameter size in the range of 0.005 - 0.04 µm, more in particular in the range of 0.01 - 0.03 µm.

7. Dental unit according to any of the preceding claims, wherein the water supply means includes a control unit, wherein the control unit is configured to control activation and deactivation of the disinfecting unit, wherein the control unit is configured to activate and deactivate a rinsing step for rinsing water ducts of the water supply means, the rinsing involving one rinsing step using hot water that is disinfected by the water disinfection unit, and another rinsing step using untreated water, said untreated water being cold water, for swiftly cooling down water ducts of the water supply means after the previous step of thermal treatment by rinsing with hot water.

8. Dental unit according to any preceding claims, wherein the water supply means include an operable bypass (19), arranged for bypassing the water disinfection unit (13).

9. Dental unit according to claim 8, wherein said bypass (19) is manually operable.

10. Dental unit according to claim 8 or 9 wherein said bypass (19) is automatically operable, for example at given time intervals.

11. Dental unit according to any of the preceding claims, wherein the disinfection unit (13) is configured for heating at least part of a duct system of the dental unit.

12. Dental unit according to any preceding claims, wherein at least a part of the water supply means downstream of the water disinfection unit (13) includes thermally insulating ducts, for example made of plastic.

13. Dental unit according to any of the preceding claims, wherein said thermal water disinfection unit (13) comprises at least one heating element (8) to heat supplied water (10, 21), in particular to a temperature higher than 50 °C, for example in the range of 60-80 °C.

14. A dental unit according to any of the claims 1-12 including a control unit (MC) configured for automatically initiating a disinfection mode.

## Patentansprüche

1. Zahnärztliche Einheit, beispielsweise ein Zahnarztstuhl, mit einer Wasserversorgungseinrichtung zum Zuführen von Wasser zu einer Entnahmestelle und/oder einem Zahnarztwerkzeug, wobei die Wasserversorgungseinrichtung eine Wasserfiltereinheit (15) und eine Wasserdesinfektionseinheit (13) umfasst, wobei die Wasserfiltereinheit (15) stromabwärts in Bezug auf die Wasserdesinfektionseinheit (13) angeordnet ist, **dadurch gekennzeichnet ist, dass** die Wasserdesinfektionseinheit (13) eine thermische Wasserdesinfektionseinheit ist, die dazu ausgelegt ist, heißes Wasser bei einer Temperatur zu erzeugen, so dass die Wassertemperatur an der Entnahmestelle und/oder am Zahnarztwerkzeug ausreichend hoch ist, um Bakterien abzutöten, wobei das heiße Wasser eine Temperatur von mehr als 50 °C aufweist, wobei die Wasserversorgungseinrichtung kein chemisches Desinfektionsprodukt verwendet.

2. Zahnärztliche Einheit nach Anspruch 1, wobei die Wasserfiltereinheit (15) wenigstens ein Filterrohr mit einer porösen Rohrwand (4) zum Trennen wenigstens eines Filterraums (3) von einem Sammelraum (5) umfasst, insbesondere, so, dass Wasser (6), das dem Filterraum (3) zugeführt wird, im Wesentlichen bakterienfrei, insbesondere legionellenfrei, über die poröse Rohrwand (4) zu dem Sammelraum (5) geleitet wird.

3. Zahnärztliche Einheit nach Anspruch 2, wobei die Wasserfiltereinheit (15) mit Mitteln zum Verbinden mit einem Spülsystem versehen ist, insbesondere zum Entfernen von Bakterien, die sich in dem Filterraum (3) angesammelt haben können.

4. Zahnärztliche Einheit nach einem der vorhergehenden Ansprüche 2-3, wobei das wenigstens eine Filterrohr mit wenigstens einem Flüssigkeitskanal (3) versehen ist, der sich in Längsrichtung des Rohrs erstreckt und von der porösen Rohrwand (4) umgeben ist.

5. Zahnärztliche Einheit nach einem der vorhergehenden Ansprüche 2 bis 4, wobei die poröse Rohrwand (4) des wenigstens einen Filterrohrs mit Poren mit einer Porendurchmessergröße <1 µm versehen ist.

6. Zahnärztliche Einheit nach einem der vorhergehenden Ansprüche 2 bis 5, wobei die poröse Rohrwand (4) des wenigstens einen Filterrohrs mit Poren mit einer Porendurchmessergröße im Bereich von 0,005 bis 0,04 µm versehen ist, insbesondere im Bereich von 0,01 - 0,03 µm.

7. Zahnärztliche Einheit nach einem der vorhergehenden Ansprüche, wobei die Wasserversorgungseinrichtung eine Steuereinheit einschließt, wobei die Steuereinheit dazu ausgelegt ist, die Aktivierung und Deaktivierung der Desinfektionseinheit zu steuern, wobei die Steuereinheit dazu ausgelegt ist, einen Spülschritt zum Spülen von Wasserkanälen der Wasserversorgungseinrichtung zu aktivieren und zu deaktivieren, wobei das Spülen einen Spülschritt unter Verwendung von heißem Wasser umfasst, das von der Wasserdesinfektionseinheit desinfiziert wird, und einen weiteren Spülschritt unter Verwendung von unbehandeltem Wasser, wobei das unbehandelte Wasser kaltes Wasser ist, zum schnellen Abkühlen von Wasserkanälen der Wasserversorgungseinrichtung nach dem vorherigen Schritt der Wärmebehandlung durch Spülen mit heißem Wasser.

8. Zahnärztliche Einheit nach einem der vorhergehenden Ansprüche, wobei die Wasserversorgungseinrichtung einen bedienbaren Bypass (19) einschließt, der zum Umgehen der Wasserdesinfektionseinheit (13) angeordnet ist.

9. Zahnärztliche Einheit nach Anspruch 8, wobei der Bypass (19) manuell bedient werden kann.

10. Zahnärztliche Einheit nach Anspruch 8 oder 9, wobei der Bypass (19) automatisch bedient werden kann, beispielsweise in gegebenen Zeitintervallen.

11. Zahnärztliche Einheit nach einem der vorhergehenden Ansprüche, wobei die Desinfektionseinheit (13) zum Erhitzen wenigstens eines Teils eines Kanalsystems der zahnärztlichen Einheit ausgelegt ist.

12. Zahnärztliche Einheit nach vorhergehenden Ansprüchen, wobei wenigstens ein Teil der Wasserversorgungseinrichtung stromabwärts der Wasserdesinfektionseinheit (13) wärmeisolierende Kanäle umfasst, beispielsweise aus Kunststoff.

13. Zahnärztliche Einheit nach einem der vorhergehenden Ansprüche, wobei die thermische Wasserdesinfektionseinheit (13) wenigstens ein Heizelement (8) zum Erhitzen des zugeführten Wassers (10, 21) umfasst, insbesondere auf eine Temperatur von mehr als 50 °C, beispielweise im Bereich von 60-80 °C.

14. Zahnärztliche Einheit nach einem der Ansprüche 1 bis 12, mit einer Steuereinheit (MC), die zum automatischen Auslösen eines Desinfektionsmodus ausgelegt ist.

## Revendications

1. Unité dentaire, par exemple un fauteuil dentaire, ayant un moyen d'alimentation en eau pour fournir de l'eau à un point de distribution et/ou un outil dentaire, dans laquelle le moyen d'alimentation en eau comprend une unité de filtration d'eau (15) et une unité de désinfection d'eau (13), dans laquelle l'unité de filtration d'eau (15) est agencée en aval par rapport à l'unité de désinfection d'eau (13),
**caractérisée en ce que** l'unité de désinfection de l'eau (13) est une unité de désinfection d'eau thermique qui est configurée pour générer de l'eau chaude à une température telle que la température d'eau au niveau du point de distribution et/ou de l'outil dentaire est suffisamment élevée pour tuer les bactéries, dans lequel l'eau chaude a une température supérieure à 50°C, le moyen d'alimentation en eau n'utilisant aucun produit de désinfection chimique.

2. Unité dentaire selon la revendication 1, dans laquelle ladite unité de filtration d'eau (15) comprend au moins un tube de filtre avec une paroi de tube poreuse (4) pour séparer au moins un espace de filtration (3) d'un espace de collecte (5), en particulier de telle sorte que l'eau (6), fournie audit espace de filtration (3), passe sensiblement exempte de bactéries, en particulier exempte légionelles, via ladite paroi de tube poreuse (4) vers ledit espace de collecte (5).

3. Unité dentaire selon la revendication 2, dans laquelle ladite unité de filtration d'eau (15) est pourvue d'un moyen de connexion avec un système de rinçage, en particulier dans le but d'éliminer des bactéries qui peuvent s'être accumulées dans ledit espace de filtration (3).

4. Unité dentaire selon l'une quelconque des revendications précédentes 2 à 3, dans laquelle ledit au moins un tube de filtre est pourvu d'au moins un canal de liquide (3) qui s'étend dans une direction longitudinale du tube et est entouré par ladite paroi de tube poreuse (4).

5. Unité dentaire selon l'une quelconque des revendications 2 à 4 précédentes, dans laquelle ladite paroi de tube poreuse (4) du au moins un tube de filtre est pourvue de pores ayant une taille de diamètre de pore < 1 µm.

6. Unité dentaire selon l'une quelconque des revendications 2 à 5 précédentes, dans laquelle ladite paroi de tube poreuse (4) du au moins un tube de filtre est pourvue de pores ayant une taille de diamètre de pore dans la plage de 0,005 à 0,04 µm, plus particulièrement dans la plage de 0,01 à 0,03 µm.

7. Unité dentaire selon l'une quelconque des revendications précédentes, dans laquelle le moyen d'alimentation en eau comprend une unité de commande, dans laquelle l'unité de commande est configurée pour commander une activation et une désactivation de l'unité de désinfection, dans laquelle l'unité de commande est configurée pour activer et désactiver une étape de rinçage pour rincer des conduits d'eau des moyens d'alimentation en eau, le rinçage impliquant une première étape de rinçage en utilisant de l'eau chaude qui est désinfectée par l'unité de désinfection de l'eau, et une autre étape de rinçage en utilisant de l'eau non traitée, ladite eau non traitée étant de l'eau froide, pour un refroidissement rapide des conduits d'eau du moyen d'alimentation en eau après l'étape précédente de traitement thermique par rinçage à l'eau chaude.

8. Unité dentaire selon l'une quelconque des revendications précédentes, dans laquelle le moyen d'alimentation en eau comprend une dérivation opérationnelle (19), agencée pour contourner l'unité de désinfection d'eau (13).

9. Unité dentaire selon la revendication 8, dans laquelle ladite dérivation (19) peut être actionnée manuellement.

10. Unité dentaire selon la revendication 8 ou 9 dans laquelle ladite dérivation (19) peut être actionnée automatiquement, par exemple à des intervalles de temps donnés.

11. Unité dentaire selon l'une quelconque des revendications précédentes, dans laquelle l'unité de désinfection (13) est configurée pour chauffer au moins une partie d'un système de conduits de l'unité dentaire.

12. Unité dentaire selon l'une quelconque des revendications précédentes, dans laquelle au moins une partie des moyens d'alimentation en eau en aval de l'unité de désinfection d'eau (13) comprend des conduits thermiquement isolants, réalisés par exemple en matière plastique.

13. Unité dentaire selon l'une quelconque des revendications précédentes, dans laquelle ladite unité de désinfection d'eau thermique (13) comprend au moins un élément chauffant (8) pour chauffer de l'eau fournie (10, 21), en particulier à une température supérieure à 50°C, par exemple dans la plage de 60 à 80°C.

14. Unité dentaire selon l'une quelconque des revendications 1 à 12 comprenant une unité de commande (MC) configurée pour lancer automatiquement un mode de désinfection.
